# EUROPÄISCHE PATENTANMELDUNG

(11) **EP 1 028 034 A2**
(43) Veröffentlichungstag der Anmeldung: **16.08.2000**
(21) Anmeldenummer: 00102176.5
(22) Anmeldetag: 09.02.2000
(51) Int. Cl.: B60R 21/20, B60R 21/05

(54) **Airbag-Teilmodul mit Prallkörper**

(30) Priorität: 09.02.1999 DE 29902275 U
(71) Anmelder: TRW Automotive Safety Systems GmbH & Co. KG, 63743 Aschaffenburg (DE)
(72) Erfinder: Derrick, John-Oliver, 97265 Hettstadt (DE)
(74) Vertreter: Degwert, Hartmut, Dipl.-Phys.

(57) **Zusammenfassung**

Ein Airbag-Teilmodul für Kraftfahrzeug-Lenkräder hat einen Generatorträger (1), einen Luftsack (2), eine Abdeckkappe (3) und einen Luftsackhaltering (4). Die Abdeckkappe (3) bildet zusammen mit dem Generatorträger (1) einen Aufnahmeraum für den zusammengefalteten Luftsack (2). Zwischen Generatorträger (1) und Abdeckkappe (3) ist eine plastisch verformbare, energieabsorbierende Abstützung (5) vorgesehen, die eine Gitterstruktur aufweist.

## Beschreibung

Die Erfindung betrifft ein Airbag-Teilmodul für Kraftfahrzeug-Lenkräder mit einem Generatorträger, einem Luftsack, einer Abdeckkappe und einem Luftsackhaltering, wobei die Abdeckkappe zusammen mit dem Generatorträger einen Aufnahmeraum für den zusammengefalteten Luftsack bildet.

Ein derartiges Airbag-Teilmodul wird zu einem kompletten Airbagmodul, wenn es durch einen Gasgenerator mit Zündeinrichtung ergänzt wird.

Airbagmodule für Kraftfahrzeug-Lenkräder werden inzwischen in fast allen Personenkraftfahrzeugen serienmäßig eingebaut. Der in Abhängigkeit von einem Fahrzeug-Verzögerungssignal explosionsartig aufblasbare Luftsack schützt den Kraftfahrzeuglenker bei einem Unfall vor Verletzungen, weil der Luftsack zwischen Fahrzeuglenker und Lenkrad ein nachgiebiges Gaspolster ausbildet, bevor der Oberkörper des Fahrzeuglenkers auf das Lenkrad aufschlagen kann. Derartige Airbagmodule haben sich seit vielen Jahren bewährt und dazu beigetragen, daß die gesundheitlichen Schäden bei einem Frontalaufprall des Fahrzeuges, d.h. bei einer abrupten Verzögerung in Fahrtrichtung signifikant zurückgegangen sind.

Die in Kraftfahrzeug-Lenkrädern angeordneten Airbagmodule sind bei einem seitlichen Aufprall jedoch relativ unwirksam, so daß man mehr und mehr dazu übergeht, im Fahrzeug weitere Airbagmodule anzuordnen, um die Insassen auch bei anderen Aufprallrichtungen besser schützen zu können. Die in Lenkrädern eingebauten Airbagmodule sind auch dann relativ wirkungslos, wenn es nicht bei einer einzigen starken Verzögerung in Fahrtrichtung bleibt sondern wenn nach dem Aufblasen des Luftsacks, der beim Eintauchen des Insassen in den aufgeblasenen Luftsack bestimmungsgemäß mehr oder weniger rasch entleert wird, eine zweite starke Verzögerung in Fahrtrichtung erfolgt. Je nach zeitlichem Abstand der zweiten Verzögerung von der ersten enthält der Luftsack nur noch einen mehr oder weniger großen Bruchteil seiner anfänglichen Gasfüllung, so daß er als Aufprallschutz für eine sekundäre Verzögerung des Fahrzeuges nicht in Betracht kommt.

Der Erfindung liegt die Aufgabe zugrunde, ein Airbag-Teilmodul der eingangs genannten Art dahingehend zu verbessern, daß es auch bei einem Sekundäraufprall noch einen gewissen Verletzungsschutz ermöglicht, ohne dabei den Herstellungsaufwand und Platzbedarf für das Airbagmodul - beispielsweise durch einen zweiten Gasgenerator - erheblich zu vergrößern. Der gesuchte Prallschutz für einen Sekundäraufprall soll vielmehr ohne große Umstände konstruktiv in herkömmliche Airbagmodule integrierbar sein und ohne nennenswerten Mehraufwand bei der Herstellung und beim Platzbedarf auskommen.

Zur Lösung dieser Aufgabe wird erfindungsgemäß vorgeschlagen, daß bei einem Airbag-Teilmodul der eingangs genannten Art zwischen Generatorträger und Abdeckkappe eine als Prallkörper ausgebildete, plastisch verformbare, energieabsorbierende Abstützung vorgesehen wird, die eine Gitterstruktur aufweist. Eine derartige Abstützung erfüllt einmal den Zweck, die auf die Abdeckkappe ausgeübten Druckkräfte zur Betätigung des Hupenkontaktes sicher und möglichst direkt auf den Generatorträger zu übertragen. Hauptzweck der Abstützung ist jedoch, zwischen dem mit dem Lenkrad verbundenen Generatorträger und einem bei einer Sekundärverzögerung in Richtung Lenkrad beschleunigten Fahrzeuglenker einen sekundären Aufprallschutz anzuordnen, der die Verletzungsgefahr für den Fall herabsetzt, wenn der Luftsack selbst nur noch einen geringen oder gar keinen Aufprallschutz mehr bietet.

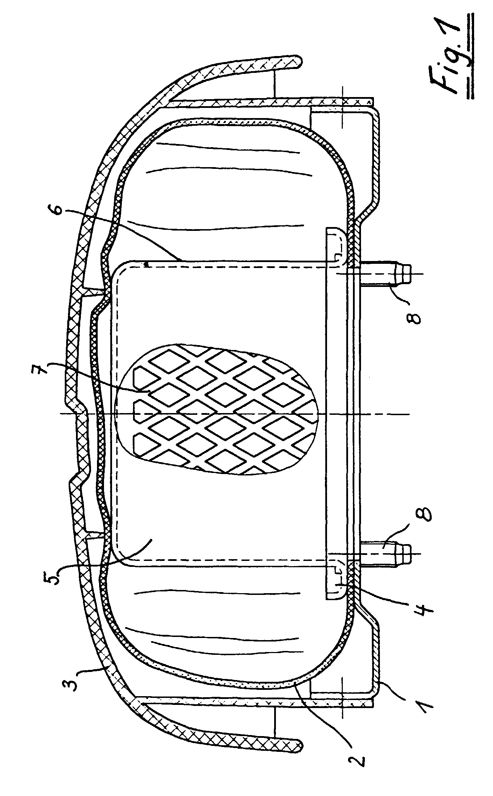

Vorteilhafte Ausgestaltungen des Erfindungsgedanken sind in den Unteransprüchen 2 bis 6 angegeben. Weitere Einzelheiten werden anhand des in Figur 1 dargestellten Ausführungsbeispiels näher erläutert.

Figur 1 zeigt ein Airbag-Teilmodul gemäß der Erfindung im Schnitt. Das Airbag-Teilmodul umfaßt in an sich bekannter Weise einen Generatorträger 1, einen zusammengefalteten Luftsack 2, eine Abdeckkappe 3 und einen Luftsackhaltering, mit dem der Rand der Eintrittsöffnung des Luftsacks 2 zwischen Generatorträger 1 und Luftsackhaltering 4 eingeklemmt und gehalten werden kann. Dazu werden üblicherweise Befestigungsmittel in Form von Schrauben 8 verwendet.

Bei dem dargestellten Ausführungsbeispiel besteht die Abstützung aus einem den Einbauraum für den Gasgenerator hutartig überwölbenden Bauteil 5, dessen sich zwischen Generatorträger 1 und Abdeckkappe 3 erstreckende Wandung 6 plastisch verformbar und energieabsorbierend ausgebildet ist. Das Bauteil 5 kann aus Blech oder Kunststoff bestehen und einstückig mit dem Luftsackhaltering 4 ausgebildet sein, wie beim dargestellten Ausführungsbeispiel. Die Wandung 6 des Bauteils 5 ist plastisch verformbar und energieabsorbierend ausgebildet und wird bei einem Sekundäraufprall zusammengestaucht. Dazu weist die Wandung 6 zweckmäßiger Weise eine Gitterstruktur 7 auf, wie sie von anderen energieabsorbierenden Bauteilen bei Kraftfahrzeugen bekannt ist. Die Gitterstruktur 7 muß nicht die dargestellte Form aufweisen sondern kann mit der Zielsetzung maximaler Energieabsorbtion für verschiedene Anwendungsfälle und Randbedingungen ohne großen Aufwand experimentell optimiert werden.

## Patentansprüche

1. Airbag-Teilmodul für Kraftfahrzeug-Lenkräder mit einem Generatorträger (1), einem Luftsack (2), einer Abdeckkappe (3) und einem Luftsackhaltering (4), wobei die Abdeckkappe (3) zusammen mit dem Generatorträger (1) einen Aufnahmeraum für den zusammengefalteten Luftsack (2) bildet, dadurch gekennzeichnet, daß zwischen Generatorträger (1) und Abdeckkappe (3) eine als Prallkörper ausgebildete, plastisch verformbare, energieabsorbierende Abstützung (5) vorgesehen ist, die eine Gitterstruktur aufweist.

2. Airbag-Teilmodul nach Anspruch 1, dadurch gekennzeichnet, daß die Abstützung aus einem den Einbauraum für den Gasgenerator hutartig überwölbendes Bauteil (5) besteht, dessen sich zwischen Generatorträger (1) und Abdeckkappe (3) erstreckende Wandung (6) plastisch verformbar und energieabsorbierend ausgebildet ist.

3. Airbag-Teilmodul nach Anspruch 2, dadurch gekennzeichnet, daß das Bauteil (5) aus einem Blechabschnitt hergestellt ist.

4. Airbag-Teilmodul nach Anspruch 2, dadurch gekennzeichnet, daß das Bauteil (5) aus einem Kunststoff-Formteil besteht.

5. Airbag-Teilmodul nach einem der Ansprüche 2 bis 4, dadurch gekennzeichnet, daß das Bauteil (5) einstückig mit dem Luftsackhaltering (4) ausgebildet ist.

6. Airbag-Teilmodul nach einem der Ansprüche 1 bis 5, dadurch gekennzeichnet, daß auch der Generatorträger (1) zumindest bereichsweise plastisch verformbar und energieabsorbierend ausgebildet ist.
